# EUROPEAN PATENT SPECIFICATION

(11) **EP 4 092 423 B1**
(45) Date of publication and mention of the grant of the patent: **26.02.2025**
(21) Application number: 21175165.6
(22) Date of filing: 21.05.2021
(51) Int. Cl.: G01N 35/04

(54) **METHOD AND DISTRIBUTION SYSTEM TO MOVE CARRIERS ON A TRANSPORT PLANE**
VERFAHREN UND VERTEILUNGSSYSTEM ZUM BEWEGEN VON TRÄGERN AUF EINER TRANSPORTEBENE
PROCÉDÉ ET SYSTÈME DE DISTRIBUTION POUR DÉPLACER DES TRANSPORTEURS SUR UN AVION DE TRANSPORT

(43) Date of publication of application: 23.11.2022
(73) Proprietor: F. Hoffmann-La Roche AG, 4070 Basel (CH); Roche Diagnostics GmbH, 68305 Mannheim (DE)
(72) Inventor:
(74) Representative: Herren, Barbara

(56) References cited:
- EP-A1- 2 455 763
- EP-A1- 2 589 966
- WO-A1-2014/059335

## Description

### Field of the Invention

The present disclosure relates to a method and a distribution system to move carriers on a transport plane, in particular to move carriers, which can transport laboratory containers on a laboratory distribution system. The disclosed method and the distribution system can also be applied to move carriers, which can transport payloads such as goods, wares of a warehouse, products to be manufactured in a manufacturing site or other objects on a transport plane.

### Background

In diagnostic laboratory systems, goods like test sample containers, test reagent containers, or test consumable containers are transported between multiple laboratory stations such as pre-analytical, analytical and post- analytical stations according to predefined laboratory workflows. Typically, such laboratory containers are transported on carriers. In fully-automated diagnostic laboratory systems the carriers are moved on a transport plane of a distribution system according to planned routes in order to distribute the laboratory containers to connected pre- analytical, analytical and post- analytical stations which can conduct different sample processing steps like preparing, analysing, or archiving of test samples.

Distribution systems and methods to transport carriers on a transport plane are well known in the art. For example, laboratory distribution systems are described in e.g. EP3095739A1, EP3537159A1 or WO2012158541. These publications describe laboratory sample distribution systems with passive carriers or self-propelling carriers on transport planes. WO2008148513 describes a storage or conveying system comprising an electromagnetic planar motor which moves one or more conveying devices, especially movable pallets, cars, or containers mounted on wheels or rolls. WO2017186825 describes a robotic load handler coordination system which comprises a robotic load handler capable of traversing, when in use, a plurality of cells arranged in a grid formation. WO2013059335 describes a device and system for automatically deploying maintance carriers to an automation track and discloses the preamble of claims 1 and 10.

With improved throughputs, improved turnaround times, and growing test portfolios of automated diagnostic laboratory stations, the number of transported goods and corresponding routes as well as the complexity of routes on the laboratory distribution system are increasing. The risk that carriers block each other in executing their moves or collide with each other on the transport plane increases with increased traffic density and complexity on the transport plane.

Therefore, there is a need to move carriers on a transport plane in an improved, more efficient, and reliable way.

### Summary

An object of the present disclosure is to provide a method to control a distribution system and a distribution system enabling an improved, more efficient and reliable transport of carriers on a transport plane of the distribution system.

The present invention relates to a method for a distribution system to move carriers on a transport plane according to claim 1.

The present invention also relates to a distribution system according to claim 10, to a computer program product according to claim 13 and to a computer-readable storage medium according to claim 14.

### Detailed description

The present invention relates to a method for a distribution system according to claim 1 to move carriers on a transport plane. The distribution system comprises at least one first carrier and at least one second carrier each adapted to carry a good. The distribution system further comprises a transport plane comprising a number of moving positions at which each carrier can start to move, move, stop, wait, and/or change its moving direction and a drive means adapted to move each carrier to the moving positions. The distribution system further comprises a control device adapted to control the drive means. The method comprises the following steps:
a) the control device plans for each carrier a move from a first moving position to a second moving position and determines for each carrier reserved moving positions adjacent to its planned second moving position
b) the control device checks if the planned second moving position of the at least one first carrier is located on a determined reserved moving position of the at least one second carrier
c) if the planned second moving position of the at least one first carrier is located on a determined reserved moving position of the at least one second carrier, the control device plans for the at least one first carrier a new move to a new second moving position which is not located on a determined reserved moving position of the at least one second carrier
d) the control device controls the drive means to move the at least one first carrier to its planned new second moving position and to move the at least one second carrier to its planned second moving position.

As used herein, the term "carrier" relates to a support structure to support and transport a good or payload. The carriers are in particular provided with appropriate holding means to support, and if required, to secure the objects in the needed manner and orientation. In one embodiment, the carrier is configured for receiving, holding, transporting, and/or releasing a good or payload such as a laboratory container. The carrier can be self-propelling or can be propelled by and moved on a transport plane. For example, the carrier comprises motor-driven wheels. A carrier comprising motor-driven wheels is well known in the art and may be designed as described in US9182419B2. In another example, the carrier comprises at least one magnetically device which interacts with a magnetic field so that a magnetic force is applied to carrier. A carrier comprising at least one magnetically active device which interacts with a magnetic field is well known in the art and may be designed as described in EP2988134A1 or as described in EP3070479A1.

In one embodiment, the at least one first carrier has a lower priority than the at least one second carrier. The priority of each carrier may be determined by the priority of the carried good. For example, the good of the at least one second carrier is a laboratory container comprising a test sample for which a test result is required with high urgency compared to a test sample in a laboratory container carried by the at least one first carrier. Accordingly, in step c) the control device plans for the at least one first carrier a new move and not for the at least one second carrier.

As used herein, the term "transport plane" relates to a two dimensional plane, surface, bed, layer, platform or flat base onto which carriers are positioned such that the carriers are movable in at least two dimensions along the plane. For instance, the transport plane could be a sliding surface mounted in a diagnostic laboratory or the ground of a manufacturing site or inside a manufacturing hall. Transport planes can be installed vertically or horizontally including slopes. Also curved transport planes are possible. A carrier can contact the transport plane such that friction can be used to drive and control the movements or a carrier can move contactless, e.g. by air or magnetic levitation providing a small gap between carrier and the transport plane. For a third dimension either the transport plane is formed correspondingly with corresponding limitations in upward and downward slope, or some kind of levitation mechanism is installed such as magnetic levitation or air cushion technique with the corresponding limitations in reachable height without losing control. For vertical transportation in the third dimension also elevator/paternoster mechanism can be installed.

As used herein, the term "moving position" relates to a predefined position on the transport plane at which a carrier can start to move, move, stop, wait, and/or change its direction. In systems such as described in EP2566787 or WO2013098202 the drive means defines these moving positions by its hardware limitations. In these systems, usually moving positions are defined above an electro-magnetic coil. At these moving positions, it is possible to start the movement of a carrier, to move the carrier, to stop the carrier, to wait the carrier, and change its moving direction. On other transport planes the moving positions can be defined as wanted or required to form a useful set of crossing points, junctions, start and stop positions.

As used herein, the term "drive means" relates to a system configured to move carriers on the transport plane. The drive means can be implemented in the carriers itself e.g. wheels connected to an electric motor with connected battery and electronics. Another possibility are linear motors. Also possible are passive carriers. For instance, a magnetically device is fixed in the carrier and a magnetic force provided by magnetically active and drivable elements such as electro-magnetic coils, enforcing the carriers to move by generated electro-magnetic fields. The coils can be installed under, above, besides or in the transport plane. For instance, an arrangement of magnetic coils underneath the transport plane is described e.g. in EP2566787 or WO2013098202.

The term "control device" as used herein encompasses any physical or virtual processing device configurable to control the drive means in a way that carriers are moved to planned moving positions on the transport plane. The control device may receive information from a data management unit regarding which carrier needs to be transported to a certain moving position and at what time. Based on this information, the control device may determine a route comprising one or more moves from a start position to a final destination position for a carrier on the transport plane of the distribution system. The control device may control the distribution system to move and/ or stop the carrier to/ or at the right moving position on the transport plane of the distribution system. The control device may, for instance, be embodied as a programmable logic controller adapted to execute a computer-readable program provided with instructions to perform movements of carriers on the transport plane.

In one embodiment, the control device comprises a first sub-device configured to execute steps a) to c) and a second sub-device configured to execute step d), wherein the second sub-device is communicatively connected to the first sub-device and to the drive means.

In one embodiment, the control device is comprised by the distribution system. In another embodiment, the control device is an external control device communicatively connected to the distribution system.

In one embodiment, the second moving position is a moving position at which a carrier can wait for a predefined waiting time. For example, the carrier waits on the second moving position until a subsequent move can be executed. The waiting time may depend on the current traffic situation or traffic density on the transport plane.

As used herein, the term "reserved moving position" relates to a moving position which cannot be a second moving position. So, a determined reserved moving position is a moving position adjacent to a second moving position of a carrier which can cannot be a second moving position to which another carrier can be moved or positioned at a certain point in time. Or in other words, a determined reserved moving position adjacent to a second moving position of a carrier cannot be occupied by other carriers. Therefore, a carrier always has at least two free moving positions around it when the carrier is located on its second moving position so that the carrier can be moved away from its second moving position by a subsequent move. Accordingly, a carrier has always a certain free moving space on the transport plane and can never be completely blocked or enclosed by other carriers on the transport plane so that deadlock situations, in which carriers block each other from executing their moves, can be reduced or prevented. In one embodiment, a determined reserved moving position of the at least one first carrier overlaps with a determined reserved moving position of the at least one second carrier.

Accordingly, the number of determined reserved moving positions on the transport plane can be minimized and at the same time the number of moving positions available for the planning of moves of further carriers can be maximized. For example, a number of carriers share common determined reserved moving positions to form a path of reserved moving positions between by the number of carriers. In one embodiment, the determined reserved moving positions of a carrier are not located on its planned move. Accordingly, a carrier always has at least two free moving positions located in front and/or to its side when the carrier is located on its second moving position so that the carrier can be moved forward or sideways from its second moving position by a subsequent move.

In one embodiment, a determined reserved moving position is a moving position which cannot be a second moving position for a predefined time. Thus, a determined reserved moving position is reserved for a certain carrier for a predefined time. For example, the predefined time is the required time for executing the planned move from the first moving position to the second moving position. After the predefined time, a determined reserved moving position is released and can be used for the planning of further moves in step a) or of further new moves in step c).

In one embodiment, a determined reserved moving position is a moving position which cannot be a second moving position until a predefined event occurs. For example, the predefined event is when a carrier is located on or passes a predefined moving position or any other predefined position on the transport plane. After the event, a determined reserved moving position is released and can be used for the planning of further moves in step a) or of further new moves in step c).

According to the invention, the determined reserved moving positions of each carrier comprise at least one reserved moving position which is located in front of its planned second moving position and at least one reserved moving position which is located at at least one side of its planned second moving position with respect to the direction of its planned move. Accordingly, at least two moving positions adjacent to a second moving position of a carrier cannot be occupied by other carriers. With this arrangement of determined reserved moving positions around the second moving position, the carrier always has at least one free moving position in front and at least one free moving position next to it with respect to the direction of its planned move when the carrier is located on its second moving position. So, in a subsequent move the carrier may either move straight forward or change its moving direction by 90°.

In a further embodiment, the determined reserved moving positions of each carrier comprise two reserved moving positions which are located in front of its planned second moving position and form an L shaped line of reserved moving positions together with at least one reserved moving position which is located at one side of its planned second moving position with respect to the direction of its planned move. With this arrangement of determined reserved moving positions around a second moving position, the carrier always has at least two free moving position in front and at least one moving position next to it when the carrier is located on its second moving position. So, the number of possible moving directions of a subsequent move of a carrier is improved.

In a further embodiment, the determined reserved moving positions of each carrier comprise three reserved moving positions which are located in front of its planned second moving position and form an L shaped line of reserved moving positions together with at least one reserved moving position which is located at one side of its planned second moving position with respect to the direction of its planned move. With this arrangement of determined reserved moving positions around a second moving position, the carrier always has at least three free moving position in front and at least one moving position next to it when the carrier is located on its second moving position. So, the number of possible moving directions of a subsequent move of a carrier is further improved.

In one embodiment, in step c) the planning of the new move to a new second moving position comprises shortening the planned move or extending the planned move. In one embodiment, the planned move is extended if shortening the planned move is not possible, e.g. if the new second moving position would still be located on a determined reserved moving position of a carrier or a carrier is already located on the new second moving position. Alternatively, the planned move is shortened if extending the planned move is not possible, e.g. if the new second moving position would still be located on a determined reserved moving position of a carrier or a carrier is already located on the new second moving position.

In one embodiment, the planned move is extended by extending the planned move in the same direction of the planned move or in a direction perpendicular to the direction of the planned move. In one embodiment, the planned move is extended in a direction perpendicular to the direction of the planned move if extending the planned move in the same direction of the planned move is not possible, e.g. if the new second moving position would still be located on a determined reserved moving position or a carrier is already located on the new second moving position. Extending the planned move in a direction perpendicular to the direction of the planned move may either comprise adding a moving position or a move to the planned move in a direction perpendicular to the direction of the planned move. If a move is added to the planned move in a direction perpendicular to the direction of the planned move, the added move comprises a first moving position which is the second moving position of the planned move in step a) and the new second moving position.

In one embodiment, the planned move of each carrier comprises the first moving position, the second moving position, and a number of moving positions located between the first moving position and the second moving position. The new move of the at least one first carrier is shortened if less moving positions are located between its first moving position and its new second moving position compared to the planned move of the at least one first carrier. The new move of the at least one first carrier is extended if more moving positions are located between its first moving position and the new second moving position compared to the planned move of the at least one first carrier. Or in other words, a move is shortened by removing a moving position located between the first moving position and the second moving position and a move is extended by adding a moving position located between the first moving position and the second moving position. In one embodiment, shortening or extending the planned move comprises minimizing the difference between the number of moving positions located between the first moving position and the second moving position of the planned move and the number of moving positions located between the first moving position and the new second moving position of the new move. Accordingly, a deviation from the planned move of step a) is minimized.

In one embodiment, the planned move of each carrier comprises the first moving position, the second moving position, and a number of moving positions located between the first moving position and the second moving position. The determined reserved moving positions of each carrier are not located on the number of moving positions located between the first moving position and the second moving position of the planned move of each carrier.

In one embodiment, the number of moving positions located between the first moving positions and the second moving positions or between the first moving positions and the new second moving positions is in a range of 0 to a maximum number of moving positions between the first moving positions and the second moving positions or between the first moving positions and the new second moving position. This maximum number of moving positions may be given by hardware limitations of the distribution system such as the size of the transport plane and/or density of moving position on the transport plane. In one embodiment, the transport plane comprises at least two boarders or edges opposite to each other. A number of moving positions are located between the two boarders or edges and the maximum number of moving positions between the first moving positions and the second moving positions or between the first moving positions and the new second moving position is the number of moving positions located between the two boarders or edges less two moving positions. For example, the transport plane is a square plane surrounded with four edges and comprises 36 moving positions arranged as a square grid or chessboard manner of 6 x 6 moving positions. Accordingly, the maximum number of possible moving positions between the first moving positions and the second moving positions or between the first moving positions and the new second moving positions is 4.

In one embodiment, in step a) the control device further plans for the at least one first carrier a subsequent move from its planned second moving position to a third moving position. In step c) the planning of the new move to a new second moving position comprises minimizing the number of moving positions located between the new second moving position and the planned third moving position. Accordingly, a deviation from a planned arrival time of the carrier at the third moving position may be reduced or prevented.

In one embodiment, in step c) the planning of the new move to a new second moving position further comprises determining for the at least one first carrier new reserved moving positions adjacent to its planned new second moving position and maximizing an overlap of the new determined reserved moving positions of the at least one first carrier with the determined reserved moving positions of the at least one second carrier. Thus, the at least one first carrier and the at least one second carrier have common determined reserved moving positions after re-planning the move of the at least one first carrier. Accordingly, the number of determined reserved moving positions on the transport plane can be minimized and at the same time the number of moving positions available for the planning of moves of further carriers can be maximized. In one embodiment, the new determined reserved moving positions of the at least one first carrier which do not overlap with the determined reserved moving positions of the at least one second carrier are positioned adjacent to each other.

In one embodiment, in step a) the control device plans the moves and determines the reserved moving positions for the at least one first carrier and the at least one second carrier simultaneously. Accordingly, the time for planning the moves can be reduced.

In one embodiment, in step a) the control device uses a routing algorithm for planning the moves. As used herein, the term "routing algorithm" is an algorithm determining or calculating a route for each carrier on the transport plane from a start position to a final destination position. As used herein, the term "route" relates to a path a carrier moves from a start position to a final destination position on the transport plane. The route may comprise only one move, e.g. a carrier may move directly from a start position to a final destination position. In this case the first moving position is the start position and the second moving position is the final destination position. The route may comprise more than one move, e.g. a carrier may move via one or more intermediate destination positions from the start position to the final destination position. In this case the first moving position is the start position or an intermediate final position and the second moving position is an intermediate final position or the final destination position. Thus, a route of a carrier on the transport plane form a start position to a final destination position might be divided into one or more moves via one or more intermediate destination positions. The start position is a moving position where the carrier is located on the transport plane when the algorithm starts to determine or calculate its route. The final destination position is a moving position on the transport plane where the carrier needs to go to. Final destination positions are moving positions on the transport plane which have in particular a special functionality, e.g. where a laboratory container, a part of a test sample, or a consumable is handed over from or to the transport plane to or from e.g. an analytical station or pre- or post-analytical station. For a manufacturing site a final destination position is in particular a moving position corresponding to a machine station performing some manufacturing process on a semi-finished good. A start position for one carrier can also be in particular a final destination position for another carrier or more in particular for the same carrier. In one embodiment, the first moving position is a start position of a route or an intermediate destination position of the route. The second moving position is an intermediate destination position or a final destination position of the route. In one embodiment, the carrier can wait on an intermediate destination position or a final destination position for a predefined time. For example, the carrier waits on an intermediate final position until a subsequent move can be executed which may depend on the current traffic situation or traffic density on the transport plane. Or the carrier waits on a final destination position so that a test sample can be aspirated out of the test sample container for analysis of the test sample at an analytical station. In one embodiment, the final destination position may be located at a dedicated area on the transport plane for temporal placing or parking of carriers (buffering areas). In one embodiment, the third moving position is an intermediate destination position of the route or a final destination position of the route.

The routing algorithm usually determines or calculates several straight moves for each route starting with the current position of the carrier on a moving position as a start position to an intermediate destination position or final destination position. The intermediate destination position and the final destination position are also moving positions. Each move may have a start and a stop on a moving position. The stop of a last move of a route is either an intermediate destination position or a final destination position.

In a specific embodiment, the routing algorithm is a A* algorithm or a Windowed Hierarchical Cooperative A* algorithm. Such routing algorithms are well known in the art.

For example, EP3537159A1 discloses a laboratory distribution system and a method for planning routes using an informed search algorithm, in particular an A*-algorithm or a D*-algorithm, which is a refined A*- algorithm.

"Ma Tao, A. Elssamadisy, N. Flann and B. Abbott, "Optimal route re-planning for mobile robots: a massively parallel incremental A* algorithm," Proceedings of International Conference on Robotics and Automation, Albuquerque, NM, USA, 1997, pp. 2727-2732 vol.3, doi: 10.1109/ROBOT.1997.619372." discloses the principal advantage of incremental A* algorithms for precomputing and maintaining routes for mobile robotic vehicles, which is the completeness and optimality of the approach.

"Cooperative pathfinding" (Silver, D., 2005, "Cooperative pathfinding", Young, R. M., and Laird, J. E., eds., AIIDE, 117-122. AAA I Press) discloses algorithms solving the so-called multi-agent path finding problem, where agents need to find routes to separate destinations, given full information about the routes of other agents. The algorithms are suitable for use in Real-Time Strategy games and other real-time environments. The algorithms proposed assume that a grid represents space, and use the so-called Manhattan distance as the basis for calculating a cost function. They use a windowed search with a limited fixed cooperative search depth called a Windowed Hierarchical Cooperative A* (WHCA*).

In one embodiment, in step a) the control device further plans for the at least one second carrier a subsequent move from its planned second moving position to a third moving position. Between step a) and step b), the control device checks if the at least one first carrier and the at least one second carrier block each other at their planned second moving positions to make their planned subsequent moves within a predefined time. The control device does not execute steps b) to d) and controls the drive means to move the at least one first carrier to its planned second moving position and to move the at least one second carrier to its planned second moving position if the at least one first carrier and the at least one second carrier do not block each other at their planned second moving positions to make their planned subsequent moves within a predefined time. Thus, steps b) to d) of the method are executed only if the control device determines or identifies that carriers are blocking each other such that there is no possibility to execute their planned subsequent moves within a predefined time. This minimizes or avoids the occurrences of deadlocks meaning the blocking of carriers on the transport plane. In a specific embodiment, the predefined time is in a range of 2 seconds to 60 seconds or 2, 5, 10 seconds.

In one embodiment, step b) is executed before the control unit controls the drive means to move the carriers according to the planned moves of step a). So, in step b) each planned move is checked if a second moving position of at least one first carrier is located on a determined reserved moving position of the at least one second carrier. If the second moving position of the at least one first carrier is located on a determined reserved moving position of the at least one second carrier, steps c) to d) are executed. In one embodiment, after step b) the steps c) to d) are not executed and the control device controls the drive means to move the at least one first carrier to its planned second moving position and to move the at least one second carrier to its planned second moving position according to the planned moves of step a) if the planned second moving position of the at least one first carrier is not located on a determined reserved moving position of the at least one second carrier.

In one embodiment, steps b) to d) of the method are executed for carriers located on the transport plane or located on a part of the transport plane independent of the current traffic situation or traffic density on the transport plane.

In one embodiment, steps b) to d) of the method are only executed for carriers located on the transport plane or located on a part of the transport plane if the traffic density on the transport plane or on a part of the transport plane is above a certain threshold. As the risk of a deadlock situation, the risk of a decline of the transportation performance, or the risk of a carrier collision increases with and increased traffic density on the transport plane, steps b) to d) of the method are only executed if the traffic density exceeds a certain threshold value. Or in other words, the traffic density on the transport plane might be used to trigger steps b) to d) of the method. Such a traffic density might be determined as described in the following embodiments.

In one embodiment, the transport plane comprises a first area comprising a number of moving positions. In step a) the control device further calculates a percentage of moving positions of the first area which are planned second moving positions. The control device executes steps b) to d) for carriers for which a second moving position was planned in the first area if the calculated percentage of moving positions is above a predefined threshold. Accordingly, steps b) to d) are only executed if a traffic density above a certain threshold is detected or determined based on the percentage of moving positions, which are planned second moving positions.

In another embodiment, the transport plane comprises a first area comprising a number of moving positions. In step a), the control device further calculates a percentage of moving positions of the first area which are planned second moving positions or which are located between first moving positions and second moving positions. The control device executes steps b) to d) for carriers for which a second moving position was planned in the first area if the calculated percentage of moving positions is above a predefined threshold. Accordingly, steps b) to d) are only executed if a traffic density above a certain threshold is detected or determined based on the percentage of moving positions, which are planned second moving positions or are located between first moving positions and second moving positions.

In another embodiment, the transport plane comprises a first area and a second area each comprising a number of moving positions. In step a) the control device further calculates a percentage of moving positions of the first area which are planned second moving positions. The control device executes steps b) to d) for carriers for which a second moving position was planned in the second area if the calculated percentage of moving positions is above a predefined threshold. Accordingly, the traffic density determined based on the moving positions which are planned second moving positions in the first area is used to trigger steps b) to d) for carriers for which a second moving position was planned in the second area.

In another embodiment, the transport plane comprises a first area and a second area each comprising a number of moving positions. In step a) the control device calculates a percentage of moving positions of the first area which are planned second moving positions or which are located between first moving positions and second moving positions located in the first and/or second area. The control device executes steps b) to d) for carriers for which a second moving position was planned in the second area if the calculated percentage of moving positions is above a predefined threshold. Accordingly, the traffic density determined based on the moving positions which are planned second moving positions in the first area or moving positions located between first moving positions and second moving positions located in the first and/or second area is used to trigger steps b) to d) for carriers for which a second moving position was planned in the second area.

In another embodiment, the transport plane comprises multiple first areas and one or more second areas. In step a) the control device calculates for each of the multiple first areas a percentage of moving positions which are planned second moving positions or which are located between first moving positions and second moving positions located in one or more of the first areas and/or in one or more of the second areas. The control device executes steps b) to d) for carriers for which a second moving position was planned in the one or more second areas if the calculated percentage of moving positions of a predefined number of the multiple first areas is above a predefined threshold.

In one embodiment, the transport plane comprises a first area comprising a number of moving positions. The distribution system further comprises a carrier detection system configured to detect carriers in the first area, to determine the number of the detected carriers in the first area, and to send a value of the determined number of detected carriers in the first area to the control device. Prior to step b) the control device receives the value of the determined number of detected carriers in the first area and calculates a percentage of moving positions of the first area which are occupied by detected carriers based on the received value. The control device executes steps b) to d) for carriers detected in the first area if the calculated percentage of moving positions which are occupied by detected carriers is above a predefined threshold. Accordingly, steps b) to d) are only executed if a traffic density above a certain threshold is detected or determined based on the percentage of moving positions, which are occupied by detected carriers.

As used herein, the term "carrier detection system" relates to a system for detecting and localizing the carriers on the transport plane. Non-limiting examples are sensors such as optical, magnetic, capacitive or inductive sensors embedded in the transport plane. Another option can be a camera system with an image analyzing software to detect and localize the carriers.

In another embodiment, the transport plane comprises a first area and a second area each comprising a number of moving positions. The distribution system further comprises a carrier detection system configured to detect carriers in the first area or in the first area and in the second area, to determine the number of the detected carriers in the first area, and to send a value of the determined number of detected carriers in the first area to the control device. Prior to step b) the control device receives the value of the determined number of detected carriers in the first area and calculates a percentage of moving positions of the first area which are occupied by detected carriers based on the received value. The control device executes steps b) to d) for carriers for which a second moving position was planned in the second area or for carriers detected in the second area if the calculated percentage of moving positions which are occupied by detected carriers in the first area is above a predefined threshold.

In one embodiment, the transport plane comprises multiple first areas and one or more second areas. In step a) the control device calculates for each of the multiple first areas a percentage of moving positions occupied by detected carriers as described above. The control device executes steps b) to d) for carriers detected in the one or more second areas if the calculated percentage of moving positions of a predefined number of the multiple first areas is above a predefined threshold.

In one embodiment, the predefined threshold is more than 15% or more than 20%. Thus, the control device executes steps b) to d) if more than 15% or more than 20% of the moving positions in the one or more first areas of the transport plane are planned second moving positions, moving positions located between first moving positions and second moving positions, and/or moving positions occupied by detected carriers.

In one embodiment, the number of moving positions in the first area is equal or less than the number of moving positions of the transport plane. Accordingly, the first area may comprise all or a part of the moving positions of the transport plane.

In one embodiment, the number of moving positions in the first area is less than the number of moving positions of the transport plane. The number of moving positions in the second area is equal or less then the number of moving positions of the transport plane. Accordingly, the first area comprises a part of moving positions of the transport plane and the second area may comprise all or a part of the moving positions of the transport plane. So, in the case that the second area comprises all moving positions of the transport plane, the moving positions of the first area overlap with the moving positions of the second area.

In one embodiment, the number of moving positions in the first area is less than the number of moving positions of the transport plane. The number of moving positions in the second area is less than the number of moving positions of the transport plane. Accordingly, the first area comprises a part of the moving positions of the transport plane and the second area comprises a part of the moving positions of the transport plane. The part of moving positions of the first area and the part of moving positions of the second area may be adjacent to each other, spatially separated, or partially overlap.

The present invention also relates to a distribution system according to claim 10 comprising:
- at least one first carrier and at least one second carrier each adapted to carry a good
- a transport plane comprising a number of moving positions at which each carrier can start to move, move, stop, wait, and/or change its moving direction
- a drive means adapted to move each carrier to the moving positions
- a control device adapted to control the drive means
And the distribution system is configured to execute the steps of the method as described herein.

In one embodiment, the distribution system is a laboratory distribution system. As used herein, the term "laboratory distribution system" relates to a system being designed to transport or distribute carriers to connected laboratory stations such as pre- analytical stations, analytical stations, or post- analytical stations of a diagnostic laboratory system. The laboratory distribution system may form a fully-automated diagnostic laboratory systems together with one or more operatively connected laboratory stations. A pre-analytical station can usually be used for the preliminary processing of laboratory containers or their content such as for example test samples. An analytical station can be designed, for example, to use a test sample or part of the test sample and a test reagent in order to produce a measurable signal, on the basis of which it is possible to determine whether an analyte is present, and if desired in what concentration. A post-analytical station is used for the post-processing of test samples or test sample containers like the archiving of laboratory containers or their content such as for example test samples. Such pre-analytical stations, analytical stations, and post-analytical stations are well known in the art.

In one embodiment, the good is a laboratory container. As used herein, the term "laboratory container" relates to a device adapted for receiving, storing, transporting, and/or releasing a content such as a test reagent (e.g. reagent for a histological test, a immunochemistry test, a clinical chemistry test, a coagulation test, a hematological test, or a molecular biological test, etc.), a test sample (e.g. tissue, blood, urine, serum, plasma, or liquefied biopsy sample, etc.), a laboratory consumable (e.g. pipette tip, cuvette, glass slide, micro-well plate, etc.). Thus, the laboratory container may be a test reagent container, test sample container, or a laboratory consumable container. Depending on the content of the laboratory container, test sample processing steps, and manufacturer the material as well as the dimension of the laboratory container like diameter, side length, height and geometry may vary.

A carrier may move along predefined routes on the transport plane of the laboratory distribution system. The carrier may move directly from a start position to a final destination position or via one or more intermediate destination positions between the start position and the final destination position. In the latter case, the route defines the order of intermediate destination positions the carrier passes on its path from the start position to the final destination position. Typically, the start position and the final destination position are located at connected pre-analytical stations, analytical stations, or post- analytical stations so that test sample processing steps according to predefined laboratory workflows are conducted. For example, the start position may be located at a pre- analytical station from which a test sample container with a pre-processed test sample can be retrieved. The final destination position may be located at a connected analytical station where the pre-processed test sample is aspirated out of the test sample container for analysis of the test sample. Or the final destination position may be located at post-analytical station or dedicated area on the transport plane for temporal placing or parking of carriers and their corresponding laboratory containers (buffering areas).

In one embodiment, the laboratory distribution system comprises a number of electro-magnetic actuators or electro-magnetic coils being stationary arranged below the transport plane and adapted to generate magnetic fields to move the carriers. The carrier comprises a magnetically active device which can interact with the magnetic fields so that a magnetic force is applied to the carrier for moving the carriers over the transport plane. Such a laboratory distribution system is well known in the art and may be designed as described in EP2566787B 1 reference 100 in figure 1 and corresponding description.

In one embodiment, the transport plane comprises a first area comprising a number of moving positions. The distribution system further comprises a carrier detection system configured to detect carriers in the first area, to determine the number of the detected carriers in the first area, and to send a value of the determined number of detected carriers in the first area to the control device. And the distribution system is configured to execute the steps of the method as described herein.

In one embodiment, the transport plane comprises a first area and a second area each comprising a number of moving positions. The distribution system further comprises a carrier detection system configured to detect carriers in the first area or in the first area and in the second area, to determine the number of the detected carriers in the first area, and to send a value of the determined number of detected carriers in the first area to the control device. The distribution system is configured to execute the steps of the method according as described herein.

The present invention further relates to a computer program product comprising instructions to cause the distribution systems as described herein to execute the steps of the methods as described herein.

The present invention further relates a computer-readable storage medium having stored thereon the computer program product as described herein.

### Short description of the figures

**Figure 1** shows a schematic view of an embodiment of a distribution system.
**Figures 2A-C** show schematic representations of a transport plane and an embodiment of the method to move carriers on the transport plane.
**Figures 3A-C** show schematic representations of embodiments of a transport plane.
**Figure 4** shows a flowchart of an embodiment of a method for a distribution system to move carriers on a transport plane.

### Detailed description of the figures

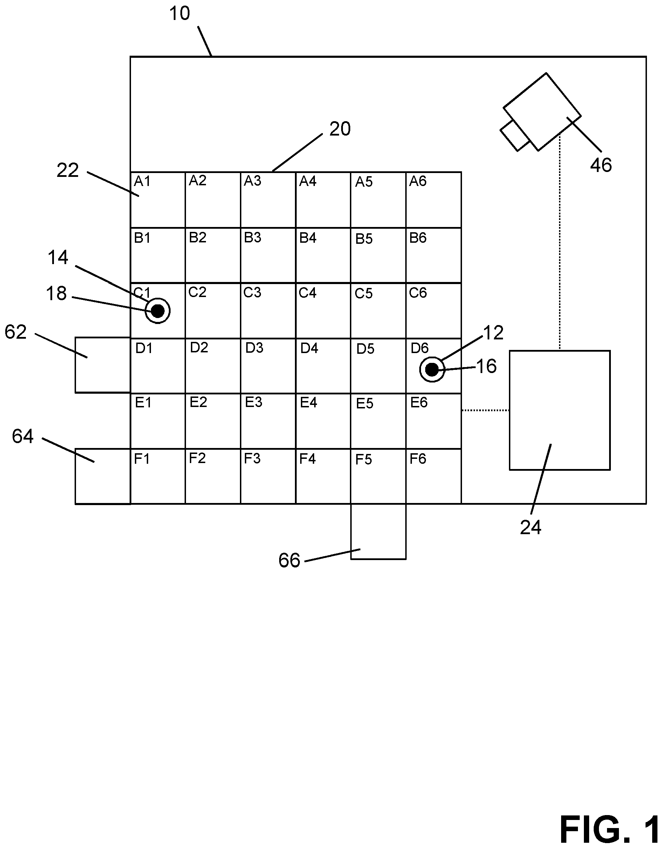

**Figure 1** shows a schematic view of an embodiment of a distribution system (10). The shown distribution system (10) comprises a first carrier (12) and a second carrier (14) each adapted to carry a good (16, 18) and a transport plane (20) comprising a number of moving positions (22, A1 to F6) at which each carrier (12, 14) can start to move, move, stop, wait, and/or change its moving direction. In the shown embodiment, the transport plane (20) is a square plane surrounded with four edges and comprises 36 moving positions (22, A1 to F6) arranged as a square grid of 6 x 6 moving positions (22, A1 to F6).

The first carrier (12) is located on moving position D6, the second carrier (14) is located on the moving position C1, and both carriers (12, 14) carry a good (16, 18). The good might be a laboratory container comprising a test reagent, a test sample, or a laboratory consumable such as pipette tips or cuvettes. Carriers (12, 14) can also be moved without carrying a good, e.g. when they are moved to moving positions (22, D 1, F 1, F5) which are located in front of an operatively connected pre- analytical station (62), analytical station (64), or a post- analytical station (66), e.g. to pick up a laboratory container with a test sample.

The distribution system (10) further comprises a drive means (not shown) adapted to move each carrier (12, 14) to the moving positions (22, A1 to F6). In the shown embodiment, the drive means comprises a number of electro-magnetic actuators or electro-magnetic coils being stationary arranged below the transport plane (20) and adapted to generate magnetic fields to move the carriers (12, 14). The carriers (12, 14) comprise magnetically devices which can interact with the magnetic fields so that a magnetic force is applied to the carriers (12, 14) for moving the carriers (12, 14) over the transport plane (20).

The distribution system (10) further comprises a control device (24) which is communicatively connected to the drive means as indicated by a dashed line and adapted to control the drive means. The shown distribution system (10) further comprises a carrier detection system (46) in form of a camera. The carrier detection system (46) is configured to detect carriers (12, 14) on the transport plane (20), to determine the number of the detected carriers (12, 14) on the transport plane (20), and to send a value of the determined number of detected carriers (12, 14) to the control device (24) which is communicatively connected to the carrier detection system (46) as indicated by a dashed line. This transmitted value of detected carriers can be used to detect or determine a certain traffic density on the transport plane (20) at a certain point in time.

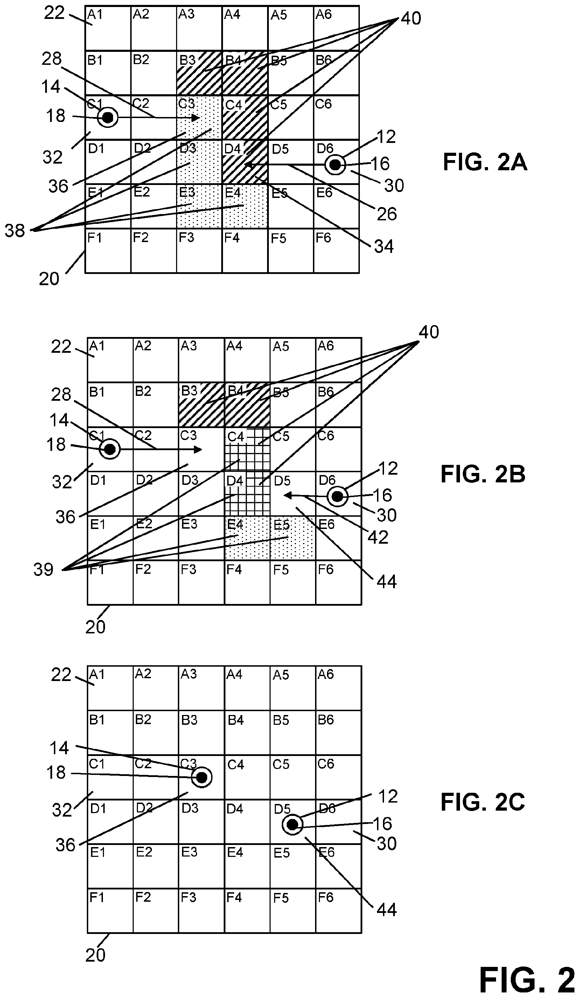

**Figures 2A-C** show schematic representations of a transport plane (20) and an embodiment of the method (52) to move carriers (12, 14) on the transport plane (20). Figure 2A shows the same transport plane as shown in Figure 1 where a first carrier (12) is located on a first moving position (30, D6) and the second carrier (14) is located on a first moving position (32, C1). As indicated by arrows in Figure 2A, in a first step a) (54) of the method (52), the control device (24) plans for the first carrier (12) a move (26) from its first moving position (30, D6) to a second moving position (34, D4). The control device (24) also plans for the second carrier (14) a move (28) from its first moving position (32, C1) to a second moving position (36, C3). The control device further determines for the first carrier (12) reserved moving positions (38, C3, D3, E3, E4) adjacent to its planned second moving position (34, D4) as indicated by dotted boxes and for the second carrier (14) reserved moving positions (40, B3, B4, C4, D4) adjacent to its planned second moving position (36, C3) as indicated by shaded boxes. In the shown embodiment, the determined reserved moving positions (38) of the first carrier (12) comprise three reserved moving positions (38, C3, D3, E3) which are located in front of its planned second moving position (34) and form an L shaped line of reserved moving positions together with at least one reserved moving position (38, E4) which is located at one side of its planned second moving position (34) with respect to the direction of its planned move (26). Also the determined reserved moving positions (40) of the second carrier (12) comprise three reserved moving positions (40, B4, C4, D4) which are located in front of its planned second moving position (36) and form an L shaped line of reserved moving positions together with at least one reserved moving position (40, B3) which is located at one side of its planned second moving position (36) with respect to the direction of its planned move (28). Alternatively, the determined reserved moving positions comprise only one reserved moving position which is located in front of its planned second moving position and at least one reserved moving position which is located at at least one side of its planned second moving position. Alternatively, the determined reserved moving positions comprise only two reserved moving positions which are located in front of its planned second moving position and form an L shaped line of reserved moving positions together with at least one reserved moving position which is located at one side of its planned second moving position with respect to the direction of its planned move.

Subsequently, the control device (24) checks if the planned second moving position (34, D4) of the first carrier (12) is located on a determined reserved moving position (40, B3, B4, C4, D4) of the second carrier (14) in step b) (56) of the method (52). In the shown embodiment, the planned second moving position (34, D4) of the first carrier (12) is located on a determined reserved moving position (40, B3, B4, C4, D4) of the second carrier (14), namely on moving position D4. Therefore, the control device (24) plans for the first carrier (12) a new move (42) to a new second moving position (44, D5) which is not located on a determined reserved moving position (40, B3, B4, C4, D4) of the second carrier (14) as indicated by an arrow in Figure 2B. In the shown embodiment, the planning of the new move (42) to a new second moving position (44, D5) comprises shortening the planned move (26). Alternatively, the planning of the new move (42) to a new second moving position comprises extending the planned move (26), e.g. to a new second moving position located on D3. Whether the planned move (26) is shortened or extended may depend on further planned moves of further carriers on the transport plane (20) or on a third moving position of a subsequent move the first carrier (30). The planned move (26) of the first carrier (12) comprises the first moving position (30), the second moving position (34), and one moving position (22) located between the first moving position (30) and the second moving position (34). The new move (42) of the first carrier (12) is shortened because less moving positions (22) are located between its first moving position (30) and its new second moving position (44) compared to the planned move (26). As further shown in Figure 2B, after planning the new move (44) to a new second moving position (44, D4) some of the new determined reserved moving positions (39, C4, D4, E4, E5) of the first carrier (12) overlap with the determined reserved moving positions (40, B3, B4, C4, D4) of the second carrier (14) as indicated by gridded boxes.

Finally, the control device (24) controls the drive means to move the first carrier (12) to its planned new second moving position (44, D5) and to move the second carrier (14) to its planned second moving position (36, C3) so that the first carrier (12) is located on its new second moving position (44, D5) and the second carrier (14) is located on its planned second moving position (36, C3) as shown in Figure 2C.

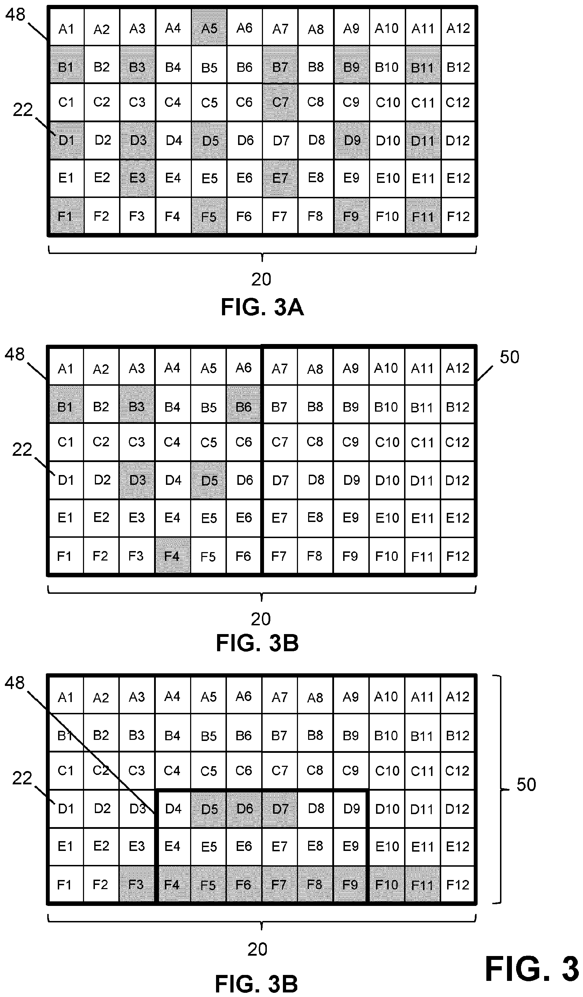

**Figures 3A**-C show schematic representations of embodiments of a transport plane (20). The three transport plans (20) as shown in are rectangular planes surrounded with fourFigures 3A-C edges and comprise 72 moving positions (22, A1 to F12) arranged as a rectangular grid of 6 x 12 moving positions (22, A1 to F12). The transport plane (20) as shown in Figure 3A comprises a first area (48) comprising all moving positions (22, A1 to F12). Alternatively, the first area (48) may comprise only a part of the moving positions (22) of the transport plane (20). The transport planes (20) as shown in Figure 3B and 3C comprise a first area (48) and a second area (50) each comprising a certain number of moving positions (22). The number of moving positions (22) in the first area (48) is less than the number of moving positions (22) of the transport plane (20). The number of moving positions (22) in the second area (50) might be less or equal than the number of moving positions (22) of the transport plane (20).

For example, the first area (48) comprises 36 moving positions (22, A1 to F6) arranged as a square grid of 6 x 6 moving positions (22, A1 to F6) and the second area (50) comprises 36 moving positions (22, A7 to F12) arranged as a square grid of 6 x 6 moving positions (22, A7 to F12) as shown in Figure 3B. Thus, the first area (48) and the second area (50) comprise an equal number of moving positions (22) and are adjacent to each other.

The transport plane (20) as shown in Figure 3C comprises also a first area (48) and a second area (50). The first area (48) comprises 18 moving positions (22, D4 to F9) arranged as a rectangular grid of 3 x 6 moving positions (22, D4 to F9) and the second area (50) comprises all 72 moving positions (22, A1 to F12) of the transport plane (20) arranged as a rectangular grid of 6 x 12 moving positions (22, A1 to F12). Thus, the part of moving positions (22, D4 to F9) of the first area (48) overlap with the moving positions (22, A1 to F12) of the second area (50). However, any geometric form of the first area (48) and second area (50) and any number of moving positions (22) within the first area (48) and second area (50) is possible. The first area (48) and the second area (50) may be adjacent to each other, spatially separated, or partially overlap.

The percentage of moving positions (22) of the first area (48) which are planned second moving positions (34, 26), located between first moving positions (30, 32) and second moving positions (34, 36), or occupied by detected carriers (12, 14) can be used as a trigger to execute step b) (56) to step d) (60) of the method (52) for carriers located in the first area (48) and/or second area (50). Or in other words, the traffic density within the first area (48) may be used as a trigger to execute step b) (56) to step d) (60) of the method (52) for carriers located in the first area (48) and/or second area (50).

In one embodiment, step b) (56) to step d) (60) of the method (52) are only executed if the percentage of moving positions (22) is above a predefined threshold. For example, the predefined threshold is 20%.

As shown in Figure 3A, 18 moving positions (22) of the 72 moving positions (22) of the first area (48) are planned second moving positions as indicated by grey boxes. So, 25% of the moving positions (22) of the first area (48) are planned second moving positions indicating a high traffic density in the first area (48). Accordingly, step b) (56) to step d) (60) of the method (52) are executed by the control device (24) for carriers located in the first area (48) of the transport plane (20).

As shown in Figure 3B, a carrier detection system (46) detected 6 carriers on 6 moving positions (22) of the 36 moving positions (22) of the first area (48) as indicated by grey boxes. So, approximately 16% of the moving positions (22) of the first area (28) are occupied by detected carriers (12, 14) indicating a low traffic density in the first area (48). Therefore, step b) (56) to step d) (60) of the method (52) are not executed by the control device (24) for carriers located in the first area (48) and/or second area (50). But the control device (24) controls the drive means to move the at least one first carrier (12) to its planned second moving position and to move the at least one second carrier (14) to its planned second moving position according to the planned moves of step a).

As shown in Figure 3C, 9 moving positions (22) of the 18 moving positions (22) of the first area (48) are located between first moving positions and second moving positions located in the first area (48) and second area (50) as indicated by grey boxes. So, 50% of the moving positions (22) of the first area (28) are located between first moving positions and second moving positions. Therefore, step b) (56) to step d) (60) of the method (52) are executed by the control device (24) for carriers located in the first area (48) and/or second area (50). In this case, only a part of the transport plate (20) is considered for determining the traffic density of the transport plane (20).

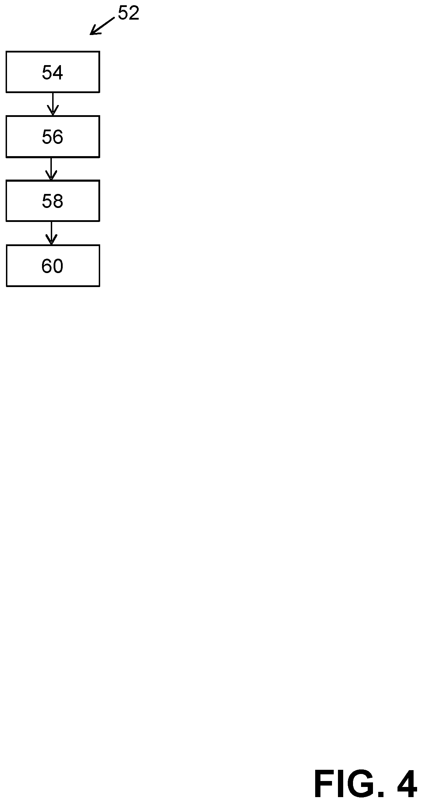

**Figure 4** shows a flowchart of an embodiment of a method (52) for a distribution system (10) to move carriers (12, 14) on a transport plane (20). As shown in Figure 1, the distribution system (10) comprises at least one first carrier (12) and at least one second carrier (14) each adapted to carry a good (16, 18), a transport plane (20) comprising a number of moving positions (22) at which each carrier (12, 14) can start to move, move, stop, wait, and/or change its moving direction, a drive means adapted to move each carrier (12, 14) to the moving positions (22), and a control device (24) adapted to control the drive means.

In step a) (54) of the method (52), the control device (24) plans for each carrier (12, 14) a move (26, 28) from a first moving position (30, 32) to a second moving position (34, 36) and determines for each carrier (12, 14) reserved moving positions (38, 40) adjacent to its planned second moving position (34, 36).

Afterwards, the control device (24) checks if the planned second moving position (34) of the at least one first carrier (12) is located on a determined reserved moving position (40) of the at least one second carrier (14) in step b) (56) of the method (52).

In step c) (58) of the method (52), the control device (24) plans for the at least one first carrier (12) a new move (42) to a new second moving position (44) which is not located on a determined reserved moving position (40) of the at least one second carrier (14) if the planned second moving position (34) of the at least one first carrier (12) is located on a determined reserved moving position (40) of the at least one second carrier (14). In step c) (58) of the method (52) the planning of the new move (42) to a new second moving position (44) may comprise shortening the planned move (26) or extending the planned move (26). The planned move (26) may be extended by extending the planned move (26) in the same direction of the planned move (26) or in a direction perpendicular to the direction of the planned move (26).

After planning a new move (42) to a new second moving position (44) for the at least one first carrier (12), the control device (24) controls the drive means to move the at least one first carrier (12) to its planned new second moving position (44) and to move the at least one second carrier (14) to its planned second moving position (36) in step d) (60) of the method (52). In one embodiment, after step b) the steps c) to d) are not executed and the control device (24) controls the drive means to move the at least one first carrier (12) to its planned second moving position (34) and to move the at least one second carrier (14) to its planned second moving position (36) if the planned second moving position (34) of the at least one first carrier (12) is not located on a determined reserved moving position (40) of the at least one second carrier (14).

In the preceding description and figures, numerous specific details are set forth in order to provide a thorough understanding of the present disclosure. It will be apparent, however, to one having ordinary skill in the art that the specific detail need not be employed to practice the present teaching. In other instances, well-known materials or methods have not been described in detail in order to avoid obscuring the present disclosure.

Particularly, modifications and variations of the disclosed embodiments are certainly possible in light of the above description. It is therefore to be understood, that within the scope of the appended claims, the invention may be practiced otherwise than as specifically devised in the above examples.

Reference throughout the preceding specification to "one embodiment", "an embodiment", "one example" or "an example", means that a particular feature, structure or characteristic described in connection with the embodiment or example is included in at least one embodiment. Thus, appearances of the phrases "in one embodiment", "in an embodiment", "one example" or "an example", in various places throughout this description are not necessarily all referring to the same embodiment or example.

### List of reference numbers

- 10: distribution system
- 12: first carrier
- 14: second carrier
- 16: first good
- 18: second good
- 20: transport plane
- 22: moving position
- 24: control device
- 26: move of first carrier
- 28: move of second carrier
- 30: first moving position of first carrier
- 32: first moving position of second carrier
- 34: second moving position of first carrier
- 36: second moving position of second carrier
- 38: determined reserved moving position of first carrier
- 39: new determined reserved moving positions
- 40: determined reserved moving position of second carrier
- 42: new move of first carrier
- 44: new second moving position of first carrier
- 46: carrier detection system
- 48: first area
- 50: second area
- 52: method for a distribution system to move carriers on a transport plane
- 54: step a) of the method
- 56: step b) of the method
- 58: step c) of the method
- 60: step d) of the method
- 62: pre-analytical station
- 64: analytical station
- 66: post-analytical station

## Claims

1. A method (52) for a distribution system (10) to move carriers (12, 14) on a transport plane (20), wherein the distribution system (10) comprises at least one first carrier (12) and at least one second carrier (14) each adapted to carry a good (16, 18), a transport plane (20) comprising a number of moving positions (22) at which each carrier (12, 14) can start to move, move, stop, wait, and/or change its moving direction, a drive means adapted to move each carrier (12, 14) to the moving positions (22), and a control device (24) adapted to control the drive means, wherein the method comprises the following steps (54, 56, 58, 60):
a) the control device (24) plans for each carrier (12, 14) a move (26, 28) from a first moving position (30, 32) to a second moving position (34, 36) and determines for each carrier (12, 14) reserved moving positions (38, 40) adjacent to its planned second moving position (34, 36)
b) the control device (24) checks if the planned second moving position (34) of the at least one first carrier (12) is located on a determined reserved moving position (40) of the at least one second carrier (14)
c) if the planned second moving position (34) of the at least one first carrier (12) is located on a determined reserved moving position (40) of the at least one second carrier (14), the control device (24) plans for the at least one first carrier (12) a new move (42) to a new second moving position (44) which is not located on a determined reserved moving position (40) of the at least one second carrier (14)
d) the control device (24) controls the drive means to move the at least one first carrier (12) to its planned new second moving position (44) and to move the at least one second carrier (14) to its planned second moving position (36) **characterized in that** the determined reserved moving positions (38, 40) of each carrier (12,14) comprise at least one reserved moving position which is located in front of its planned second moving position (34, 36) and at least one reserved moving position which is located at at least one side of its planned second moving position (34, 36) with respect to the direction of its planned move (26, 28).

2. Method according to any one of claims 1 to 2, wherein in step c) the planning of the new move (42) to a new second moving position (44) comprises shortening the planned move (26) or extending the planned move (26).

3. Method according to claim 3, wherein the planned move (26) is extended by extending the planned move (26) in the same direction of the planned move (26) or in a direction perpendicular to the direction of the planned move (26).

4. Method according to claim 3, wherein in step a) the control device (24) further plans for the at least one first carrier (12) a subsequent move from its planned second moving position (34) to a third moving position, wherein in step c) the planning of the new move (42) to a new second moving position (44) comprises minimizing the number of moving positions (22) located between the new second moving position (44) and the planned third moving position.

5. Method according to any one of claims 3 to 5, wherein in step c) the planning of the new move (42) to a new second moving position (44) further comprises determining for the at least one first carrier (12) new reserved moving positions (39) adjacent to its planned new second moving position (44) and maximizing an overlap of the new determined reserved moving positions (39) of the at least one first carrier (12) with the determined reserved moving positions (40) of the at least one second carrier (14).

6. Method according to any one of claims 1 to 6, wherein the transport plane (20) comprises a first area (48) comprising a number of moving positions (22), wherein in step a) the control device (24) further calculates a percentage of moving positions (22) of the first area (48) which are planned second moving positions (34, 36), wherein the control device executes steps b) to d) for carriers (12, 14) for which a second moving position (34, 36) was planned in the first area (50) if the calculated percentage of moving positions (22) is above a predefined threshold.

7. Method according to any one of claims 1 to 5, wherein the transport plane (20) comprises a first area (48) and a second area (50) each comprising a number of moving positions (22), wherein in step a) the control device (24) further calculates a percentage of moving positions (22) of the first area (48) which are planned second moving positions (34, 36), wherein the control device executes steps b) to d) for carriers (12, 14) for which a second moving position (34, 36) was planned in the second area (50) if the calculated percentage of moving positions (22) is above a predefined threshold.

8. Method according to any one of claims 1 to 5, wherein the transport plane (20) comprises a first area (48) comprising a number of moving positions (22), wherein the distribution system (10) further comprises a carrier detection system (46) configured to detect carriers (12, 14) in the first area (48), to determine the number of the detected carriers (12, 14) in the first area (48), and to send a value of the determined number of detected carriers (12, 14) in the first area (50) to the control device (24), wherein prior to step b) the control device (24) receives the value of the determined number of detected carriers (12, 14) in the first area (50) and calculates a percentage of moving positions (22) of the first area (50) which are occupied by detected carriers (12, 14) based on the received value, wherein the control device executes steps b) to d) for carriers (12, 14) detected in the first area (48) if the calculated percentage of moving positions (22) which are occupied by detected carriers (12, 14) is above a predefined threshold.

9. Method according to any one of claims 1 to 5, wherein the transport plane (20) comprises a first area (48) and a second area (50) each comprising a number of moving positions (22), wherein the distribution system (10) further comprises a carrier detection system (46) configured to detect carriers (12, 14) in the first area (48) or in the first area (48) and in the second area (50), to determine the number of the detected carriers (12, 14) in the first area (48), and to send a value of the determined number of detected carriers (12, 14) in the first area (50) to the control device (24), wherein prior to step b) the control device (24) receives the value of the determined number of detected carriers (12, 14) in the first area (50) and calculates a percentage of moving positions (22) of the first area (50) which are occupied by detected carriers (12, 14) based on the received value, wherein the control device executes steps b) to d) for carriers (12, 14) for which a second moving position (34, 36) was planned in the second area (50) or for carriers (12, 14) detected in the second area (50) if the calculated percentage of moving positions (22) which are occupied by detected carriers (12, 14) in the first area (48) is above a predefined threshold.

10. A distribution system (10) comprising:
- at least one first carrier (12) and at least one second carrier (14) each adapted to carry a good (16, 18)
- a transport plane (20) comprising a number of moving positions (22) at which each carrier (12, 14) can start to move, move, stop, wait, and/or change its moving direction
- a drive means adapted to move each carrier (12, 14) to the moving positions (22)
- a control device (24) adapted to control the drive means
**characterized in that**
the distribution system (10) is configured to execute the steps (54, 56, 58, 60) of the method (52) according to any one of claims 1 to 7.

11. Distribution system (10) according to claim 10, wherein the transport plane (20) comprises a first area (48) comprising a number of moving positions (22), wherein the distribution system (10) further comprises a carrier detection system (46) configured to detect carriers (12, 14) in the first area (48), to determine the number of the detected carriers (12, 14) in the first area (48), and to send a value of the determined number of detected carriers (12, 14) in the first area (50) to the control device (24), wherein the distribution system (10) is configured to execute the steps of the method according to claim 8.

12. Distribution system (10) according to claim 10, wherein the transport plane (20) comprises a first area (48) and a second area (50) each comprising a number of moving positions (22), wherein the distribution system (10) further comprises a carrier detection system (46) configured to detect carriers (12, 14) in the first area (48) or in the first area (48) and in the second area (50), to determine the number of the detected carriers (12, 14) in the first area (48), and to send a value of the determined number of detected carriers (12, 14) in the first area (50) to the control device (24), wherein the distribution system (10) is configured to execute the steps of the method according to claim 9.

13. A computer program product comprising instructions to cause the distribution system (10) according to claim 10, 11 or 12 to execute the steps of the method according to any one of claims 1 to 9.

14. A computer-readable storage medium having stored thereon the computer program product of claim 13.

## Patentansprüche

1. Verfahren (52) für ein Verteilungssystem (10) zum Bewegen von Trägern (12, 14) auf einer Transportebene (20), wobei das Verteilungssystem (10) mindestens einen ersten Träger (12) und mindestens einen zweiten Träger (14), die jeweils dafür ausgelegt sind, ein Erzeugnis (16, 18) zu tragen, eine Transportebene (20), die eine Anzahl von Bewegungspositionen (22) umfasst, an denen jeder Träger (12, 14) eine Bewegung beginnen, sich bewegen, stoppen, warten und/oder seine Bewegungsrichtung ändern kann, ein Antriebsmittel, das dafür ausgelegt ist, jeden Träger (12, 14) zu den Bewegungspositionen (22) zu bewegen, und eine Steuerungsvorrichtung (24), die dafür ausgelegt ist, das Antriebsmittel zu steuern, umfasst, wobei das Verfahren die folgenden Schritte (54, 56, 58, 60) umfasst:
a) die Steuerungsvorrichtung (24) plant für jeden Träger (12, 14) eine Bewegung (26, 28) aus einer ersten Bewegungsposition (30, 32) in eine zweite Bewegungsposition (34, 36) und bestimmt für jeden Träger (12, 14) reservierte Bewegungspositionen (38, 40) neben seiner geplanten zweiten Bewegungsposition (34, 36);
b) die Steuerungsvorrichtung (24) prüft, ob sich die geplante zweite Bewegungsposition (34) des mindestens einen ersten Trägers (12) an einer bestimmten reservierten Bewegungsposition (40) des mindestens einen zweiten Trägers (14) befindet;
c) befindet sich die geplante zweite Bewegungsposition (34) des mindestens einen ersten Trägers (12) an einer bestimmten reservierten Bewegungsposition (40) des mindestens einen zweiten Trägers (14), plant die Steuerungsvorrichtung (24) für den mindestens einen ersten Träger (12) eine neue Bewegung (42) in eine neue zweite Bewegungsposition (44), die sich nicht an einer bestimmten reservierten Bewegungsposition (40) des mindestens einen zweiten Trägers (14) befindet;
d) die Steuerungsvorrichtung (24) steuert das Antriebsmittel so, dass es den mindestens einen ersten Träger (12) in seine geplante neue zweite Bewegungsposition (44) bewegt und den mindestens einen zweiten Träger (14) in seine geplante zweite Bewegungsposition (36) bewegt, **dadurch gekennzeichnet, dass** die bestimmten reservierten Bewegungspositionen (38, 40) jedes Trägers (12, 14) mindestens eine reservierte Bewegungsposition, die sich vor seiner geplanten zweiten Bewegungsposition (34, 36) befindet, und mindestens eine reservierte Bewegungsposition, die sich auf mindestens einer Seite seiner geplanten zweiten Bewegungsposition (34, 36) in Bezug auf die Richtung seiner geplanten Bewegung (26, 28) befindet, umfassen.

2. Verfahren nach einem der Ansprüche 1 bis 2, wobei in Schritt c) das Planen der neuen Bewegung (42) in eine neue zweite Bewegungsposition (44) das Verkürzen der geplanten Bewegung (26) oder das Verlängern der geplanten Bewegung (26) umfasst.

3. Verfahren nach Anspruch 3, wobei die geplante Bewegung (26) durch Verlängern der geplanten Bewegung (26) in dieselbe Richtung der geplanten Bewegung (26) oder in eine Richtung senkrecht zu der Richtung der geplanten Bewegung (26) verlängert wird.

4. Verfahren nach Anspruch 3, wobei in Schritt a) die Steuerungsvorrichtung (24) ferner für den mindestens einen ersten Träger (12) eine Folgebewegung aus seiner geplanten zweiten Bewegungsposition (34) in eine dritte Bewegungsposition plant, wobei in Schritt c) das Planen der neuen Bewegung (42) in eine neue zweite Bewegungsposition (44) das Minimieren der Anzahl von Bewegungspositionen (22), die sich zwischen der neuen zweiten Bewegungsposition (44) und der geplanten dritten Bewegungsposition befinden, umfasst.

5. Verfahren nach einem der Ansprüche 3 bis 5, wobei in Schritt c) das Planen der neuen Bewegung (42) in eine neue zweite Bewegungsposition (44) ferner das Bestimmen neuer reservierter Bewegungspositionen (39) neben seiner geplanten neuen zweiten Bewegungsposition (44) für den mindestens einen ersten Träger (12) und das Maximieren einer Überlagerung der neuen bestimmten reservierten Bewegungspositionen (39) des mindestens einen ersten Trägers (12) mit den bestimmten reservierten Bewegungspositionen (40) des mindestens einen zweiten Trägers (14) umfasst.

6. Verfahren nach einem der Ansprüche 1 bis 6, wobei die Transportebene (20) einen ersten Bereich (48) umfasst, der eine Anzahl von Bewegungspositionen (22) umfasst, wobei in Schritt a) die Steuerungsvorrichtung (24) ferner einen Prozentsatz an Bewegungspositionen (22) des ersten Bereiches (48) berechnet, die geplante zweite Bewegungspositionen (34, 36) sind, wobei die Steuerungsvorrichtung die Schritte b) bis d) für Träger (12, 14) ausführt, für die eine zweite Bewegungsposition (34, 36) in dem ersten Bereich (50) geplant wurde, wenn der berechnete Prozentsatz an Bewegungspositionen (22) über einer vordefinierten Schwelle liegt.

7. Verfahren nach einem der Ansprüche 1 bis 5, wobei die Transportebene (20) einen ersten Bereich (48) und einen zweiten Bereich (50) umfasst, die jeweils eine Anzahl von Bewegungspositionen (22) umfassen, wobei in Schritt a) die Steuerungsvorrichtung (24) ferner einen Prozentsatz an Bewegungspositionen (22) des ersten Bereiches (48) berechnet, die geplante zweite Bewegungspositionen (34, 36) sind, wobei die Steuerungsvorrichtung die Schritte b) bis d) für Träger (12, 14) ausführt, für die eine zweite Bewegungsposition (34, 36) in dem zweiten Bereich (50) geplant wurde, wenn der berechnete Prozentsatz an Bewegungspositionen (22) über einer vordefinierten Schwelle liegt.

8. Verfahren nach einem der Ansprüche 1 bis 5, wobei die Transportebene (20) einen ersten Bereich (48) umfasst, der eine Anzahl von Bewegungspositionen (22) umfasst, wobei das Verteilungssystem (10) ferner ein Trägererfassungssystem (46) umfasst, das zum Erfassen von Trägern (12, 14) in dem ersten Bereich (48), zum Bestimmen der Anzahl der erfassten Träger (12, 14) in dem ersten Bereich (48) und zum Senden eines Wertes der bestimmten Anzahl von erfassten Trägern (12, 14) in dem ersten Bereich (50) an die Steuerungsvorrichtung (24) ausgebildet ist, wobei vor Schritt b) die Steuerungsvorrichtung (24) den Wert für die bestimmte Anzahl von erfassten Trägern (12, 14) in dem ersten Bereich (50) empfängt und einen Prozentsatz an Bewegungspositionen (22) des ersten Bereiches (50), die von erfassten Trägeren (12, 14) eingenommen werden, basierend auf dem empfangenen Wert berechnet, wobei die Steuerungsvorrichtung die Schritte b) bis d) für Träger (12, 14) ausführt, die in dem ersten Bereich (48) erfasst wurden, wenn der berechnete Prozentsatz an Bewegungspositionen (22), die von erfassten Trägeren (12, 14) eingenommen werden, über einer vordefinierten Schwelle liegt.

9. Verfahren nach einem der Ansprüche 1 bis 5, wobei die Transportebene (20) einen ersten Bereich (48) und einen zweiten Bereich (50) umfasst, die jeweils eine Anzahl von Bewegungspositionen (22) umfassen, wobei das Verteilungssystem (10) ferner ein Trägererfassungssystem (46) umfasst, das zum Erfassen von Trägern (12, 14) in dem ersten Bereich (48) oder in dem ersten Bereich (48) und in dem zweiten Bereich (50), zum Bestimmen der Anzahl der erfassten Träger (12, 14) in dem ersten Bereich (48) und zum Senden eines Wertes der bestimmten Anzahl von erfassten Trägern (12, 14) in dem ersten Bereich (50) an die Steuerungsvorrichtung (24) ausgebildet ist, wobei vor Schritt b) die Steuerungsvorrichtung (24) den Wert für die bestimmte Anzahl von erfassten Trägern (12, 14) in dem ersten Bereich (50) empfängt und einen Prozentsatz an Bewegungspositionen (22) des ersten Bereiches (50), die von erfassten Trägeren (12, 14) eingenommen werden, basierend auf dem empfangenen Wert berechnet, wobei die Steuerungsvorrichtung die Schritte b) bis d) für Träger (12, 14), für die eine zweite Bewegungsposition (34, 36) in dem zweiten Bereich (50) geplant wurde, oder für Träger (12, 14), die in dem zweiten Bereich (50) erfasst wurden, ausführt, wenn der berechnete Prozentsatz an Bewegungspositionen (22), die von erfassten Trägeren (12, 14) in dem ersten Bereich (48) eingenommen werden, über einer vordefinierten Schwelle liegt.

10. Verteilungssystem (10), umfassend:
- mindestens einen ersten Träger (12) und mindestens einen zweiten Träger (14), die jeweils dafür ausgelegt sind, ein Erzeugnis (16, 18) zu tragen;
- eine Transportebene (20), die eine Anzahl von Bewegungspositionen (22) umfasst, an denen jeder Träger (12, 14) eine Bewegung beginnen, sich bewegen, stoppen, warten und/oder seine Bewegungsrichtung ändern kann;
- ein Antriebsmittel, das dafür ausgelegt ist, jeden Träger (12, 14) zu den Bewegungspositionen (22) zu bewegen;
- eine Steuerungsvorrichtung (24), die dafür ausgelegt ist, das Antriebsmittel zu steuern, **dadurch gekennzeichnet, dass** das Verteilungssystem (10) zum Ausführen der Schritte (54, 56, 58, 60) des Verfahrens (52) nach einem der Ansprüche 1 bis 7 ausgebildet ist.

11. Verteilungssystem (10) nach Anspruch 10, wobei die Transportebene (20) einen ersten Bereich (48) umfasst, der eine Anzahl von Bewegungspositionen (22) umfasst, wobei das Verteilungssystem (10) ferner ein Trägererfassungssystem (46) umfasst, das zum Erfassen von Trägern (12, 14) in dem ersten Bereich (48), zum Bestimmen der Anzahl der erfassten Träger (12, 14) in dem ersten Bereich (48) und zum Senden eines Wertes der bestimmten Anzahl von erfassten Trägern (12, 14) in dem ersten Bereich (50) an die Steuerungsvorrichtung (24) ausgebildet ist, wobei das Verteilungssystem (10) zum Ausführen der Schritte des Verfahrens nach Anspruch 8 ausgebildet ist.

12. Verteilungssystem (10) nach Anspruch 10, wobei die Transportebene (20) einen ersten Bereich (48) und einen zweiten Bereich (50) umfasst, die jeweils eine Anzahl von Bewegungspositionen (22) umfassen, wobei das Verteilungssystem (10) ferner ein Trägererfassungssystem (46) umfasst, das zum Erfassen von Trägern (12, 14) in dem ersten Bereich (48) oder in dem ersten Bereich (48) und in dem zweiten Bereich (50), zum Bestimmen der Anzahl der erfassten Träger (12, 14) in dem ersten Bereich (48) und zum Senden eines Wertes der bestimmten Anzahl von erfassten Trägern (12, 14) in dem ersten Bereich (50) an die Steuerungsvorrichtung (24) ausgebildet ist, wobei das Verteilungssystem (10) zum Ausführen der Schritte des Verfahrens nach Anspruch 9 ausgebildet ist.

13. Computerprogrammprodukt, umfassend Anweisungen zum Veranlassen des Verteilungssystems (10) nach Anspruch 10, 11 oder 12 die Schritte des Verfahrens nach einem der Ansprüche 1 bis 9 auszuführen.

14. Computerlesbares Speichermedium, auf dem das Computerprogrammprodukt nach Anspruch 13 gespeichert ist.

## Revendications

1. Procédé (52) pour un système de distribution (10) pour déplacer des transporteurs (12, 14) sur un plan de transport (20), dans lequel le système de distribution (10) comprend au moins un premier transporteur (12) et au moins un second transporteur (14) chacun adapté pour transporter un article (16, 18), un plan de transport (20) comprenant un nombre de positions de déplacement (22) au niveau desquelles chaque transporteur (12, 14) peut commencer à se déplacer, se déplacer, s'arrêter, attendre et/ou changer sa direction de déplacement, un moyen d'entraînement adapté pour déplacer chaque transporteur (12, 14) jusqu'aux positions de déplacement (22) et un dispositif de commande (24) adapté pour commander le moyen d'entraînement, dans lequel le procédé comprend les étapes (54, 56, 58, 60) suivantes :
a) le dispositif de commande (24) planifie pour chaque transporteur (12, 14) un déplacement (26, 28) d'une première position de déplacement (30, 32) jusqu'à une deuxième position de déplacement (34, 36) et détermine pour chaque transporteur (12, 14) des positions de déplacement (38, 40) réservées adjacentes à sa deuxième position de déplacement (34, 36) planifiée
b) le dispositif de commande (24) vérifie si la deuxième position de déplacement (34) planifiée de l'au moins un premier transporteur (12) est située sur une position de déplacement (40) réservée déterminée de l'au moins un second transporteur (14)
c) si la deuxième position de déplacement (34) planifiée de l'au moins un premier transporteur (12) est située sur une position de déplacement (40) réservée déterminée de l'au moins un second transporteur (14), le dispositif de commande (24) planifie pour l'au moins un premier transporteur (12) un nouveau déplacement (42) jusqu'à une nouvelle deuxième position de déplacement (44) qui n'est pas située sur une position de déplacement (40) réservée déterminée de l'au moins un second transporteur (14)
d) le dispositif de commande (24) commande le moyen d'entraînement pour déplacer l'au moins un premier transporteur (12) jusqu'à sa nouvelle deuxième position de déplacement (44) planifiée et pour déplacer l'au moins un second transporteur (14) jusqu'à sa deuxième position de déplacement (36) planifiée **caractérisé en ce que** les positions de déplacement (38, 40) réservées déterminées de chaque transporteur (12, 14) comprennent au moins une position de déplacement réservée qui est située devant sa deuxième position de déplacement (34, 36) planifiée et au moins une position de déplacement réservée qui est située au niveau d'au moins un côté de sa deuxième position de déplacement (34, 36) planifiée par rapport à la direction de son déplacement planifié (26, 28).

2. Procédé selon l'une quelconque des revendications 1 à 2, dans lequel dans l'étape c) la planification du nouveau déplacement (42) jusqu'à une nouvelle deuxième position de déplacement (44) comprend le raccourcissement du déplacement (26) planifié ou l'allongement du déplacement (26) planifié.

3. Procédé selon la revendication 3, dans lequel le déplacement (26) planifié est prolongé en prolongeant le déplacement (26) planifié dans la même direction que le déplacement (26) planifié ou dans une direction perpendiculaire à la direction du déplacement (26) planifié.

4. Procédé selon la revendication 3, dans lequel dans l'étape a) le dispositif de commande (24) planifie en outre pour l'au moins un premier transporteur (12) un déplacement ultérieur de sa deuxième position de déplacement (34) planifiée jusqu'à une troisième position de déplacement, dans lequel dans l'étape c) la planification du nouveau déplacement (42) jusqu'à une nouvelle deuxième position de déplacement (44) comprend la minimisation du nombre de positions de déplacement (22) situées entre la nouvelle deuxième position de déplacement (44) et la troisième position de déplacement planifiée.

5. Procédé selon l'une quelconque des revendications 3 à 5, dans lequel dans l'étape c) la planification du nouveau déplacement (42) jusqu'à une nouvelle deuxième position de déplacement (44) comprend en outre la détermination pour l'au moins un premier transporteur (12) de nouvelles positions de déplacement (39) réservées adjacentes à sa nouvelle deuxième position de déplacement (44) planifiée et la maximisation d'une superposition des nouvelles positions de déplacement (39) réservées déterminées de l'au moins un premier transporteur (12) avec les positions de déplacement (40) réservées déterminées de l'au moins un second transporteur (14).

6. Procédé selon l'une quelconque des revendications 1 à 6, dans lequel le plan de transport (20) comprend une première zone (48) comprenant un nombre de positions de déplacement (22), dans lequel dans l'étape a) le dispositif de commande (24) calcule en outre un pourcentage de positions de déplacement (22) de la première zone (48) qui sont des deuxièmes positions de déplacement (34, 36) planifiées, dans lequel le dispositif de commande exécute les étapes b) à d) pour les transporteurs (12, 14) pour lesquels une deuxième position de déplacement (34, 36) a été planifiée dans la première zone (50) si le pourcentage calculé de positions de déplacement (22) est supérieur à un seuil prédéfini.

7. Procédé selon l'une quelconque des revendications 1 à 5, dans lequel le plan de transport (20) comprend une première zone (48) et une seconde zone (50) comprenant chacune un nombre de positions de déplacement (22), dans lequel dans l'étape a) le dispositif de commande (24) calcule en outre un pourcentage de positions de déplacement (22) de la première zone (48) qui sont des deuxièmes positions de déplacement (34, 36) planifiées, dans lequel le dispositif de commande exécute les étapes b) à d) pour les transporteurs (12, 14) pour lesquels une deuxième position de déplacement (34, 36) a été planifiée dans la seconde zone (50) si le pourcentage calculé de positions de déplacement (22) est supérieur à un seuil prédéfini.

8. Procédé selon l'une quelconque des revendications 1 à 5, dans lequel le plan de transport (20) comprend une première zone (48) comprenant un nombre de positions de déplacement (22), dans lequel le système de distribution (10) comprend en outre un système de détection de transporteurs (46) configuré pour détecter des transporteurs (12, 14) dans la première zone (48), pour déterminer le nombre des transporteurs (12, 14) détectés dans la première zone (48), et pour envoyer une valeur du nombre déterminé de transporteurs (12, 14) détectés dans la première zone (50) au dispositif de commande (24), dans lequel avant l'étape b) le dispositif de commande (24) reçoit la valeur du nombre déterminé de transporteurs (12, 14) détectés dans la première zone (50) et calcule un pourcentage de positions de déplacement (22) de la première zone (50) qui sont occupées par les transporteurs (12, 14) détectés en se basant sur la valeur reçue, dans lequel le dispositif de commande exécute les étapes b) à d) pour les transporteurs (12, 14) détectés dans la première zone (48) si le pourcentage calculé de positions de déplacement (22) qui sont occupées par les transporteurs (12, 14) détectés est supérieur à un seuil prédéfini.

9. Procédé selon l'une quelconque des revendications 1 à 5, dans lequel le plan de transport (20) comprend une première zone (48) et une seconde zone (50) comprenant chacune un nombre de positions de déplacement (22), dans lequel le système de distribution (10) comprend en outre un système de détection de transporteurs (46) configuré pour détecter des transporteurs (12, 14) dans la première zone (48) ou dans la première zone (48) et dans la seconde zone (50), pour déterminer le nombre des transporteurs (12, 14) détectés dans la première zone (48), et pour envoyer une valeur du nombre déterminé de transporteurs (12, 14) détectés dans la première zone (50) au dispositif de commande (24), dans lequel avant l'étape b) le dispositif de commande (24) reçoit la valeur du nombre déterminé de transporteurs (12, 14) détectés dans la première zone (50) et calcule un pourcentage de positions de déplacement (22) de la première zone (50) qui sont occupées par les transporteurs (12, 14) détectés en se basant sur la valeur reçue, dans lequel le dispositif de commande exécute les étapes b) à d) pour les transporteurs (12, 14) pour lesquels une deuxième position de déplacement (34, 36) a été planifiée dans la seconde zone (50) ou pour les transporteurs (12, 14) détectés dans la seconde zone (50) si le pourcentage calculé de positions de déplacement (22) qui sont occupées par les transporteurs (12, 14) détectés dans la première zone (48) est supérieur à un seuil prédéfini.

10. Système de distribution (10) comprenant :
- au moins un premier transporteur (12) et au moins un second transporteur (14) chacun adapté pour transporter un article (16, 18)
- un plan de transport (20) comprenant un nombre de positions de déplacement (22) au niveau desquelles chaque transporteur (12, 14) peut commencer à se déplacer, se déplacer, s'arrêter, attendre et/ou changer sa direction de déplacement
- un moyen d'entraînement adapté pour déplacer chaque transporteur (12, 14) jusqu'aux positions de déplacement (22)
- un dispositif de commande (24) adapté pour commander le moyen d'entraînement,
**caractérisé en ce que**
le système de distribution (10) est configuré pour exécuter les étapes (54, 56, 58, 60) du procédé (52) selon l'une quelconque des revendications 1 à 7.

11. Système de distribution (10) selon la revendication 10, dans lequel le plan de transport (20) comprend une première zone (48) comprenant un nombre de positions de déplacement (22), dans lequel le système de distribution (10) comprend en outre un système de détection de transporteurs (46) configuré pour détecter des transporteurs (12, 14) dans la première zone (48), pour déterminer le nombre des transporteurs (12, 14) détectés dans la première zone (48), et pour envoyer une valeur du nombre déterminé de transporteurs (12, 14) détectés dans la première zone (50) jusqu'au dispositif de commande (24), dans lequel le système de distribution (10) est configuré pour exécuter les étapes du procédé selon la revendication 8.

12. Système de distribution (10) selon la revendication 10, dans lequel le plan de transport (20) comprend une première zone (48) et une seconde zone (50) comprenant chacune un nombre de positions de déplacement (22), dans lequel le système de distribution (10) comprend en outre un système de détection de transporteurs (46) configuré pour détecter des transporteurs (12, 14) dans la première zone (48) ou dans la première zone (48) et dans la seconde zone (50), pour déterminer le nombre des transporteurs (12, 14) détectés dans la première zone (48), et pour envoyer une valeur du nombre déterminé de transporteurs (12, 14) détectés dans la première zone (50) jusqu'au dispositif de commande (24), dans lequel le système de distribution (10) est configuré pour exécuter les étapes du procédé selon la revendication 9.

13. Produit de programme informatique comprenant des instructions pour amener le système de distribution (10) selon la revendication 10, 11 ou 12 à exécuter les étapes du procédé selon l'une quelconque des revendications 1 à 9.

14. Support de stockage lisible par ordinateur sur lequel est stocké le produit de programme informatique selon la revendication 13.
